Europäisches Patentamt

European Patent Office

Office européen des brevets

(11) Publication number: **0 473 850 B1**

## EUROPEAN PATENT SPECIFICATION

(45) Date of publication of patent specification: **07.12.94**    (51) Int. Cl.5: **B01D 53/14**, C07C 17/38

(21) Application number: **90309698.0**

(22) Date of filing: **05.09.90**

The file contains technical information submitted after the application was filed and not included in this specification

(54) **Method of recovering hydrocarbon halide.**

(43) Date of publication of application:
**11.03.92 Bulletin 92/11**

(45) Publication of the grant of the patent:
**07.12.94 Bulletin 94/49**

(84) Designated Contracting States:
**AT BE CH DE DK ES FR GB GR IT LI LU NL SE**

(56) References cited:
**DE-A- 3 842 005**
**US-A- 4 934 149**

(73) Proprietor: **NIPPON PAINT CO., LTD.**
**2-1-2, Oyodokita**
**Kita-ku**
**Osaka-shi Osaka 530 (JP)**

(72) Inventor: **Mashio, Fujio**
**21-2, Matsugasakiimakaido-cho,**
**Sakyo-ku**
**Kyoto-shi, Kyoto (JP)**

(74) Representative: **Perry, Robert Edward et al**
**GILL JENNINGS & EVERY**
**Broadgate House**
**7 Eldon Street**
**London EC2M 7LH (GB)**

Rank Xerox (UK) Business Services
(3.10/3.09/3.3.3)

**Description**

Field of the Invention

The present invention relates to an improved method of recovering hydrocarbon halides.

Background of the Invention

Hydrocarbon chlorides (such as methylene chloride, 1,1,1-trichloroethane, trichloroethylene, tetrachloroethylene and carbon tetrachloride) have been widely used to dissolve rubber and fatty acids, and as agents for dry cleaning and for cleaning precision machines and elements. The hydrocarbon chlorides have many advantages, such as low boiling point, high solubility or detergency and non-combustibility, but have some disadvantages in toxicity and carcinogenicity. They are therefore used under very restricted conditions.

Hydrocarbon chlorides may be recovered or removed by active carbon absorption. However, the absorption rate is poor and the recovery process is complicated.

Hydrocarbon fluorides or Freons, e.g. trichloromonofluoromethane (Freon 11), trichlorofluoroethane (Freon 113) and dichlorodifluoromethane (Freon 12)) have also been widely used for spraying, as refrigerants, foaming agents, solvents and cleaning agents for IC or precision machine and elements. The hydrocarbon fluorides have a wide boiling point range, within -40 to 50°C, and very low toxicity. They also have high solubility with oil and organic material and therefore exhibit very high detergency. However, they are implicated in destruction of the ozone layer, and in adverse environmental effects.

US-A-4934149 describes a method for reducing chlorofluorocarbon refrigerant emissions from a vapour compression cooling system or heat pump, by contacting the refrigerant with a sorbent. Separation of chlorofluorocarbons from impurities, such as acid gases, by use a liquid sorbent is also suggested. In the Example, chlorodifluoromethane is dissolved in N-methyl-2-pyrrolidone.

Summary of the Invention

According to the present invention, a hydrocarbon halide present in gaseous form in air or an inert gas is recovered by contacting the gaseous mixture with a liquid aprotic polar compound which is a 1,3-di($C_{1-3}$ alkyl)-2-imidazolidinone or 1,3-di($C_{1-3}$ alkyl)hexahydropyrimidin-2-one, hydrocarbon halide being absorbed by the said compound. It has surprisingly been found that the hydrocarbon halide can be absorbed by said compounds, which per se are known, at a high level, and effectively desorbed, for recovery.

Description of the Invention

Aprotic polar compounds used in the present invention are known. Preferably, they have a dipole moment of 3.7 to 4.8 D, especially 4.0 to 4.7 D, such as 1,3-dimethyl-2-imidazolidinone (DMI) or 1,3-dimethylhexahydropyrimidin-2-one. If the dipole moment is outside the above range, absorption and desorption abilities of the hydrocarbon halide are reduced. Although no particular theory governs the present invention, it is believed that the dipole moment is an important factor.

The hydrocarbon halide to be recovered is present in gaseous form together with air or an inert gas. The hydrocarbon halide may be in the form of off-gas containing the hydrocarbon halide, which is produced from many industries (i.e. precision industry, dry cleaning, microlithographic process, etc). In the present invention, the hydrocarbon halide-containing gas is contacted with the aprotic polar compound (liquid), generally by gas-liquid contacting processes which are known in the art. It is usually conducted by an absorption train or absorption tower which is also known in the art.

By the present invention, the hydrocarbon halide can be absorbed by the aprotic polar compound in a high absorption ratio, i.e. more than 90% by weight, preferably more than 95% by weight. The absorbed hydrocarbon halide may be recovered or desorbed at very high recovery, of more than 90%, from the aprotic polar compound. The recovery step is carried out by distillation, evaporation or introduction of heated air or nitrogen. The recovered hydrocarbon halide and aprotic polar compound can be used again.

The following Examples illustrate the invention.

Examples 1 to 9

A test tube (inside diameter 26 mm; length 200 mm) was equipped with a gas inlet tube and a gas outlet tube which both reached to the bottom of the test tube. 5 ml hydrocarbon halide was charged into the test tube and air was introduced, to form a gaseous mixture of hydrocarbon halide and air. The nature of the hydrocarbon halide, and other conditions (temperature etc) are shown in Table 1.

Test tubes as described above, equipped with a gas inlet tube and a gas outlet tube, were charged with 20 ml DMI (or, in the case of Examples 7 to 9, 16 ml DMI plus 4 ml N-methyl-2-pyrrolidone). Four to six test tubes were connected with Teflon™ tubes and kept at an absorption temperature as shown in Table 1.

The gaseous mixture was introduced and passed through the test tubes containing DMI, and the amount of the hydrocarbon halide absorbed in each test tube was measured by gas chromatography. The results are shown in Table 2.

## Table 1

| Example No. | Hydrocarbon halide | Temperature at evaporation (°C) | Air flowrate (1/min) | Evaporation time (min) | Absorption temperature (°C) |
|---|---|---|---|---|---|
| 1 | Trichloroethane | 2 | 1 | 40 | 20 |
| 2 | Trichloroethane | 20 | 1 | 35 | 20 |
| 3 | Trichloroethane | 30 | 1 | 23 | 20 |
| 4 | Tetrachloroethylene | 31 | 1 | 120 | 19 |
| 5 | Freon 113 | -20 | 0.5 | 55 | 5 |
| 6 | Freon 113 | 1 | 0.5 | 25 | 19 |
| 7 | Freon 113 | -23±2 | 0.5 | 60 | 0 |
| 8 | Freon 113 | -11±1 | 0.5 | 18 | 2 |
| 9 | Freon 113 | 2 | 0.3 | 21 | 1 |

EP 0 473 850 B1

## Table 2

| Example No. | Gas concentration | | Absorption amount ml/20 ml solv. | | | | | | Total Absorption amount (%) |
|---|---|---|---|---|---|---|---|---|---|
| | vol % | wt % | Absorption test tube | | | | | | |
| | | | 1 | 2 | 3 | 4 | 5 | 6 | |
| 1 | 2.7 | 11.8 | 2.91 | 1.24 | 0.64 | 0.16 | - | - | 98.5 |
| 2 | 3.13 | 13.0 | 2.77 | 1.58 | 0.57 | 0.10 | - | - | 98.2 |
| 3 | 5.15 | 19.8 | 4.53 | 0.43 | trace | - | - | - | 99.2 |
| 4 | 0.91 | 4.99 | 1.91 | 1.65 | 0.83 | 0.25 | 0.08 | - | 94.2 |
| 5 | 3.3 | 10.2 | 1.76 | 1.23 | 0.85 | 0.52 | 0.26 | - | 96.3 |
| 6 | 7.0 | 32.7 | 1.42 | 1.27 | 0.97 | 0.54 | 0.32 | 0.10 | 92.4 |
| 7 | 3.41 | 18.1 | 1.21 | 1.34 | 0.89 | 0.54 | 0.22 | 0.10 | 85.9 |
| 8 | 10.5 | 40.4 | 3.37 | 1.14 | 0.36 | 0.10 | 0.02 | - | 99.7 |
| 9 | 16.0 | 47.4 | 3.51 | 0.99 | 0.16 | - | - | - | 93.2 |

Example 10

A test tube as described in Examples 1-9 was charged with 5 ml Freon 113 and 20 ml DMI, and heated to 53±1° C. Air was passed through at 0.5 l/min for 60 min. The produced gas was introduced into 6 test tubes containing 20 ml DMI at 5°C. The amounts absorbed in each test tube were respectively 1.39, 1.17, 1.06, 0.77, 0.33 and 0.1 /ml/20 ml DMI) and the total absorption amount was 97.8%.

This Example shows that Freon 113 could be substantially completely recovered from a mixture of Freon 113 and DMI containing 20 vol % (27.2 wt %) of Freon 113, by passing 30 l air at 50°C through it.

Example 11

10 ml Tetrachloroethylene was charged in a 200 ml glass vessel equipped with an air introduction tube and a mixed gas outlet tube. 160 l air was passed through it at 18°C for 400 min at a flow rate of 0.4 l/min. Tetrachloroethylene was then completely evaporated, to produce a mixed gas having a volume concentration of 1.47 vol %, a weight concentration of 7.91 wt % and 15,100 ppm.

The mixed gas was passed through 200 ml DMI at 20.5°C in an absorption tube. The outlet gas therefrom contained less than 5 ppm tetrachloroethylene until 170 min from the start. Then, the concentration of tetrachloroethylene in the outlet gas linearly increased and reached 70 ppm after 315 min, and 100 ppm after 400 min (when the concentration of the absorbed liquid phase was 4.75%). Accordingly, the total absorption rate of tetrachloroethylene in DMI reached 96.5%.

Example 12

An evaporator was charged with 12.8 ml trichloroethylene at 0°C, through which air was passed at a flow rate of 2 l/min for 80 min, to produce a mixed gas having a trichloroethylene content of 117 mg/l and an air content of 2.0 vol % and 21,800 ppm. The mixed gas was then passed through four absorption tubes connected in series and containing 40 ml DMI at 5°C. The amounts of trichloroethylene absorbed in the four test tubes were respectively 9.46 ml, 2.3 ml, 0.34 ml and 0.12 ml. Accordingly, the total absorption rate was 95.5% and the outlet gas concentrations of each absorption tube were respectively 5,700 ppm, 1,770 ppm, 1,200 ppm and 990 ppm.

Example 13

A three-necked flask was equipped with a dropping funnel, a capillary and a rectifying column with a low temperature trap (dry ice and acetone). The flask was heated to 60°C and a mixture of 50 ml Freon 11 and 100 ml DMI was added dropwise over 45 min at 26,6 kPa (200 mm Hg). The amounts of Freon 11 in the low temperature trap and the absorption tube were 45.5 ml and 0.2 ml, and the distillation residue contained 1.3 ml Freon 11. The trapped Freon 11 was 47 ml, which is equivalent to 94%.

Example 14

A 500 ml three-necked flask was equipped with a capillary and a 50 cm rectifying column with which a cooling trap (-20°C) and a low temperature trap (-70°C) were connected. A mixture of 120 g tetrachloroethylene and 200 g DMI was introduced and distilled at a reduced pressure of 20 kPa (150 mm Hg). The flask was heated to 170°C from 120°C, and distillation was continued for 1.5 hours. The top temperature of the rectifying column was within 50 to 60°C of that at which tetrachloroethylene was distilled out to the cooling trap. The cooling trap contained 98 g tetrachloroethylene and the low temperature trap contained 11.6 g tetrachloroethylene. The distillation residue contained 6.5 g tetrachloro-ethylene which was determined by gas chromatography. The total absorbed tetrachloroethylene was 96.8%.

## Claims

1. A method of recovering a hydrocarbon halide present in gaseous form in air or an inert gas, which comprises contacting the gaseous mixture with a liquid aprotic polar compound which is a 1,3-di($C_{1-3}$ alkyl)-2-imidazolidinone or 1,3-di($C_{1-3}$ alkyl)hexahydropyrimidin-2-one, hydrocarbon halide being absorbed by the said compound.

2. A method according to claim 1, wherein the aprotic polar compound has a dipole moment of 3.7 to 4.8 D.

3. A method according to claim 1, wherein the aprotic polar compound is 1,3-dimethyl-2-imidazolidinone.

EP 0 473 850 B1

**4.** A method according to claim 1, wherein the aprotic polar compound is 1,3-dimethylhexahydropyrimidin-2-one.

**Patentansprüche**

**1.** Verfahren zur Wiedergewinnung eines halogenierten Kohlenwasserstoffs, der in gasförmiger Form in Luft oder einem Inertgas vorliegt, umfassend das Kontaktieren der gasförmigen Mischung mit einer flüssigen aprotisch polaren Verbindung, die ein 1,3-Di($C_{1-3}$-alkyl)-2-imidazolidinon oder 1,3-Di($C_{1-3}$-alkyl)hexahydropyrimidin-2-on ist, wobei der halogenierte Kohlenwasserstoff durch diese Verbindung absorbiert wird.

**2.** Verfahren gemäß Anspruch 1, worin die aprotisch polare Verbindung ein Dipolmoment von 3,7 bis 4,8 D hat.

**3.** Verfahren gemäß Anspruch 1, worin die aprotisch polare Verbindung 1,3-Dimethyl-2-imidazolidinon ist.

**4.** Verfahren gemäß Anspruch 1, worin die aprotisch polare Verbindung 1,3-Dimethylhexahydropyrimidin-2-on ist.

**Revendications**

**1.** Procède pour récupérer un halogènure hydrocarboné présent sous forme gazeuse dans l'air ou dans un gaz inerte, procédé consistant à mettre en contact le mélange gazeux avec un composé polaire aprotique liquide qui est soit la 1,3-di($C_{1-3}$ alkyl)-2-imidazolidinone soit la 1,3-di($C_{1-3}$ alkyl) hexahydro-pyrimidin-2-one, l'halogénure hydrocarboné étant absorbé par ledit composé.

**2.** Procédé selon la revendication 1, dans lequel le composé polaire aprotique à un moment dipolaire de 3,7 à 4,8 D.

**3.** Procédé selon la revendication 1, dans lequel le composé polaire aprotique est la 1,3-diméthyl-2-imidazolidinone.

**4.** Procédé selon la revendication 1, dans lequel le composé polaire aprotique est la 1,3-diméthylhexahy-dropyrimidin-2-one.

7